(19) Europäisches Patentamt

European Patent Office

Office européen des brevets

(11) **EP 1 018 848 A2**

(12) **EUROPEAN PATENT APPLICATION**

(43) Date of publication:
**12.07.2000 Bulletin 2000/28**

(51) Int. Cl.[7]: **H04Q 7/38**

(21) Application number: **00100116.3**

(22) Date of filing: **05.01.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **07.01.1999 JP 235999**

(71) Applicant:
**Mitsubishi Materials Corporation
Chiyoda-ku, Tokyo 100-004 (JP)**

(72) Inventors:
• **Tari, Kazuyoshi,
Mitsubishi Materials Corporation
Omiya-shi, Saitama 330-0835 (JP)**
• **Unoki, Hiroyuki,
Mitsubishi Materials Corporation
Omiya-shi, Saitama 330-0835 (JP)**
• **Nagira, Tumoru,
Mitsubishi Materials Corporation
Omiya-shi, Saitama 330-0835 (JP)**

(74) Representative: **HOFFMANN - EITLE
Patent- und Rechtsanwälte
Arabellastrasse 4
81925 München (DE)**

(54) **Channel information processing unit for a base station**

(57)    A radio communication processing unit capable of, when setting or changing a communication frequency to be used in one of base station radio units (2-1 to 2-5), setting a frequency which does not interfere with communication frequencies being used in other base station radio units (2-1 to 2-5). In the radio communication processing unit, when a power supply is turned on, when the unit is reset, or a fault detection section (12) detects a fault resulting from an interfering wave or the like in a communicable area of the base station radio unit (2-1 to 2-5), a station information requesting section (13) inquires for a channel being used in a base station radio unit (2-1 to 2-5) a different radio communication processing unit manages. A channel information editing section (16) updates information in a channel information storage section (11, 20), while, on the basis of the updated information, a channel setting section (17, 21) gives, to the base station radio unit (2-1 to 2-5) on which the fault is detected, an instruction for the change to a communication frequency which does not interfere with the communication frequencies being used in different base station radio units (2-1 to 2-5).

FIG.1

**EP 1 018 848 A2**

## Description

BACKGROUND OF THE INVENTION

1. Field of the Invention

The present invention relates to a radio communication processing unit which controls data communications made by radio between a mobile terminal and a host server connected to a network in a state where a base station radio unit(s) intervenes therebetween and which manages/controls the frequencies for use in radio communications between the base station radio unit and the mobile terminal, and further relates to a recording medium, readable by a computer, which retains a radio communication processing program.

2. Description of the Related Art

In recent years, with a rise in the needs for mobile computing, various radio communication network systems have been proposed for realizing the mobile computing; some are made up of, for example, a user side mobile terminal(s) (which will hereinafter be referred to simply as a mobile terminal(s)) for conducting transmission/receive of data by virtue of radio, a plurality of servers connected to a network, and a base station radio unit(s) connected to these servers for transferring data, transmitted from the mobile terminal by radio, to the server and further for transmitting data, directed to the mobile terminal from the network side, through the server to the addressed mobile terminal by radio.

Meanwhile, such a radio communication network system, within a communicable area of each of the base station radio units, a need exists in that each of communication frequencies for use in communications with a mobile terminal is a frequency which does not have influence on the communication frequencies put to use within the communicable areas of different base station radio units.

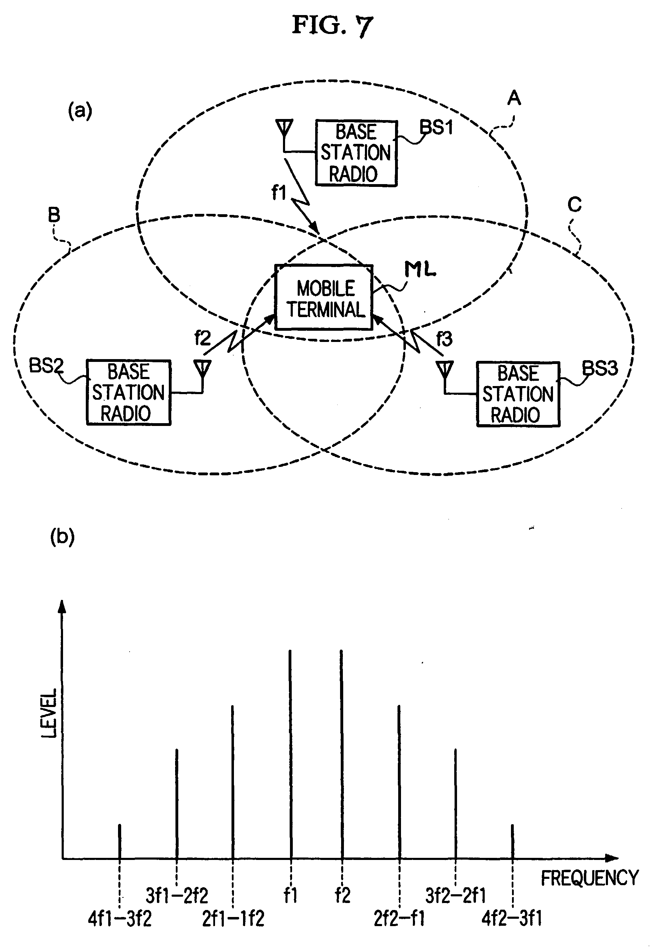

Let it be assumed that, for example, as FIG. 7A shows, a mobile terminal ML exists in a place where the communicable areas A, B and C of three base station radio units (in the illustration, each is shown as a base station radio) BS1, BS2 and BS3 overlap with each other. In this situation, if a frequency f1 the base station ratio unit BS1 uses is extremely close to a frequency f2 the base station radio unit BS2 uses (for example, $|f1 - f2| = 12.5$ kHz ), a high-order distortion occurs in the frequency spectrum the mobile terminal ML receives because of the non-linearity of a receiving circuit or the like in the interior of the mobile terminal ML, as just shown in FIG. 7B.

At this time, in a case in which the base station radio unit BS3 makes a communication with the mobile terminal ML within its own communicable areas C at a frequency $f3 = |m \times f1 \pm n \times f2|$ (m, n denote positive integers, respectively; for example, $2 \times f2 - f1$ ), the mobile terminal ML cannot receive a radio wave from the base station radio unit BS3 because of interference (or fault) resulting from the intermodulation.

However, in the case of the conventional radio communication network system, for example, at the time of power-on or in the situation in which an interfering wave comes in the communicable area so that a need for the switching of the active communication frequency arises, there is a possibility that the frequency switching takes place without considering the frequencies being in use in the other base station radio units; accordingly, the switched frequency interferes with the frequencies being used in the other base station units to incur the above-mentioned interference stemming from the intermodulation, which can constitute a hindrance to communications between a mobile terminal and a base station radio unit.

SUMMARY OF THE INVENTION

Accordingly, the present invention has been developed in consideration of these situations, and it is an object of the invention to provide a radio communication processing unit and a recording medium therefor, capable of, at setting or switching of a communication frequency for each of base station radio units, presenting a frequency which does not interfere with the communication frequencies being in use in the other base station units.

For this purpose, in accordance with an aspect of this invention, there is provided a radio communication processing unit for handling communication processing between each of a plurality of mobile terminals and a host server connected to a network, with each of the plurality of mobile terminals being connected to at least one base station radio unit within a communicable area of the base station radio unit connected thereto to establish a radio communication network system in which a communication is made by radio between the mobile terminals and the host server in a state where the base station radio unit intervenes therebetween, the radio communication processing unit comprising storage means for storing at least communication frequencies being used in all the base station radio units existing within the radio communication network system, frequency setting means for determining, on the basis of the contents stored in the storage means, a communication frequency for use in the base station radio unit connected to its own self to set the determined communication frequency in the base station radio unit, reporting means for reporting channel information including information indicative of the base station radio unit connected to its own self and information indicative of the communication frequency being currently in use in the base station radio unit through the network to a different radio communication processing unit, and storage editing means for updating the contents stored in the storage means on the basis of the channel information given from the reporting means of a different radio communication processing unit.

With this configuration, the respective radio communication processing units communicate the communication frequencies the base station radio units connected to the processing units are using currently to each other through the use of the reporting means and storage means to learn the communication frequencies being used by all the base station radio units existing in the radio communication network system; therefore, when setting a frequency to be used in the base station radio unit connected, each of the radio communication processing units can select a frequency which does not interfere with the communication frequencies being currently in use in the base station radio units connected to the other radio communication processing units.

In addition, according to a feature of this invention, this radio communication processing unit further comprises channel information requesting means for, when there arises a need to set or change the communication frequency to be used in the base station radio unit connected to its own self, outputting a channel information requesting signal to make a request for transmission of the channel information on the base station radio units connected to all the other radio communication processing units, to all the other radio communication processing units, when receiving the channel information requesting signal from the channel information requesting means of the other radio communication processing unit, the reporting means referring to the contents of the storage means for transmitting the channel information on the base station radio unit connected to its own self to the channel information requesting signal issuing radio communication processing unit, and further the frequency setting means determining a communication frequency to be used in the base station radio unit connected to its own self, on the basis of the contents in the storage means updated in the storage editing means in accordance with each of the channel information transmitted from all the other radio communication processing units in response to the request from its own channel information request means.

With this arrangement, when there arises a need to set or change the communication frequency being in use in the base station radio unit connected to its own self, first, the channel information requesting means transmits a channel information requesting signal to all the other radio communication processing units. Furthermore, upon receipt of the channel information requesting signal, each of all the other radio communication processing units transmits the channel information in the base station radio unit connected thereto to the channel information requesting signal issuing radio communication processing unit. Accordingly, the channel information requesting signal issuing radio communication processing unit updates the contents in the storage means in accordance with each of the channel information sent from all the other radio communication processing units and determines, on the basis of the updated contents, a communication frequency to be used in the base station radio unit connected to its own self.

Still additionally, according to another feature of this invention, in this radio communication processing unit, when a need arises to set or change the communication frequency to be used in the base station radio unit connected to its own self, the frequency setting means determines a communication frequency, to be used in the base station radio unit connected to its own self, on the basis of the contents stored in the storage means, while the reporting means reports information on the channel, determined by the frequency setting means, to be used in the base station radio unit connected to its own self to all the other radio communication processing units.

With this arrangement, when a need exists to set or change the communication frequency being used in the base station radio unit connected to its own self, a communication frequency to be used in the base station radio unit connected to its own self is first determined on the basis of the contents in the storage means, and the channel information depending upon the determined communication frequency is then communicated to all the other radio communication processing units. Accordingly, all the other radio communication processing units update the contents of their own storage means on the basis of the communicated channel information through use of their own storage editing means.

Incidentally, among the cases in which a need arises to set or change the communication frequency being used in the base station radio unit connected to its own self, for example, there are the case in which its own power supply is turned on, the case in which its own self is reset, and the case in which an interfering wave enters the communicable area of the base station radio unit connected to its own self to require the switching of the communication frequency being in use.

Furthermore, in this radio communication processing unit, when determining a communication frequency to be used in the base station radio unit connected to its own self, the frequency setting means makes the frequency determination under a first condition that, of a plurality of predetermined communication frequencies, a communication frequency which is not being put to use in the base station radio unit existing on the periphery of (adjacent to) the base station radio unit being a determined communication frequency using unit is determined as the communication frequency to be used therein, and if there exist a plurality of communication frequencies falling under the first condition, the frequency setting means makes the frequency determination under a second condition that a communication frequency which does not cause interference due to intermodulation is determined as the communication frequency to be used therein considering the frequencies being used in the peripheral base station radio unit and in the base station radio unit existing on the periphery of the peripheral base station radio unit, and if there exist a plurality of communication frequencies falling under the second condition or if there exist a plurality of frequencies falling under the first condition but not falling under the second condition, the frequency setting means determines the highest communication frequency of the plurality of channels as the communication frequency to be used therein.

Moreover, in accordance with another aspect of this invention, there is provided a computer-readable recording medium recording a radio communication processing program for handling communication processing between each of a plurality of mobile terminals and a host server connected to a network, with each of the plurality of mobile terminals being present within a radio communication network system in which a communication is made by radio between each of the mobile terminals and the host server in a state where base station radio units intervenes therebetween, and with the radio communication processing program being run by a communication processing computer connected to at least one base station radio unit, and even with each of the mobile terminals existing in a communicable area of the base station radio unit connected to the communication processing computer, the radio communication processing program making the communication processing computer fulfill functions of storing, in storage means, at least communication frequencies being used in all the base station radio units existing within the radio communication network system, determining, on the basis of the contents stored in the storage means, a communication frequency for use in the base station radio unit connected to its own unit to set the determined communication frequency in the same base station radio unit, reporting channel information including information indicative of the base station radio unit connected to its own unit and information indicative of the communication frequency being currently in use in the base station radio unit connected thereto through the network to a different radio communication processing unit, and updating the contents stored in the storage means on the basis of the channel information given from reporting means of the different radio communication processing unit.

BRIEF DESCRIPTION OF THE DRAWINGS

Object and features of the present invention will become more readily apparent from the following detailed description of the preferred embodiments taken in conjunction with the accompanying drawings in which:

FIG. 1 is a block diagram schematically showing a configuration of a radio communication network system to which radio communication processing units according to embodiments of this invention are applicable;

FIG. 2 is a block diagram schematically showing a configuration of a channel selection instructing section of a radio communication processing unit according to a first embodiment of this invention;

FIG. 3 is an illustration useful for describing the contents stored in a channel information storage section of the channel selection instructing section thereof;

FIG. 4 is a block diagram showing a configuration in which the channel selection instructing section shown in FIG. 2 additionally contains a function to notify another radio server of channel information when a channel changing instruction is issued manually.

FIG. 5 is a block diagram schematically showing a configuration of a channel selection instructing section of a radio communication processing unit according to a second embodiment of this invention;

FIG. 6 is a illustration useful for explaining the contents stored in a channel information storing section of the channel selection instructing section; and

FIG. 7 is an illustration available for explaining interference due to intermodulation in a radio communication network system.

DETAILED DESCRIPTION OF THE INVENTION

Embodiments of the present invention will be described hereinbelow with reference to the drawings.

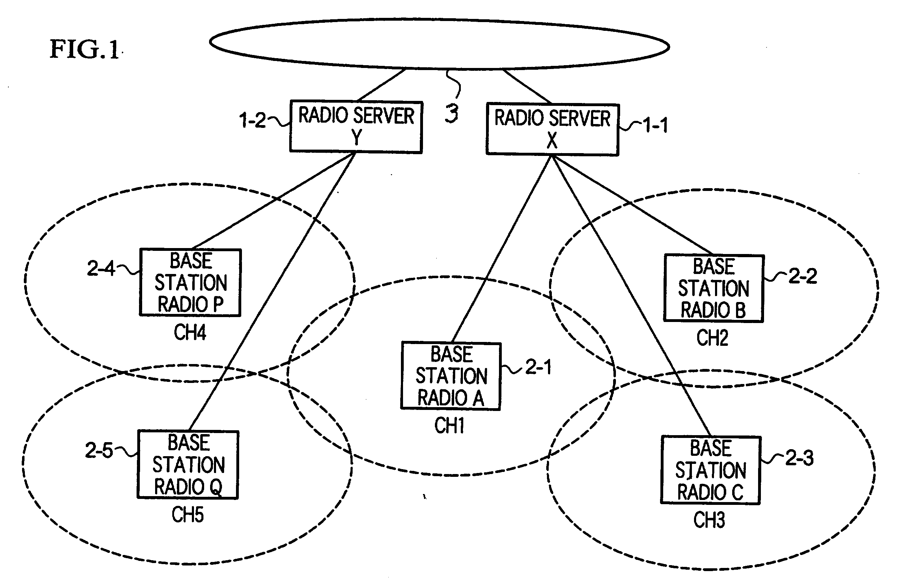

FIG. 1 is a block diagram schematically showing a configuration of a radio communication network system to which radio communication processing units (which will be referred to hereinafter as radio servers) according to the embodiments of this invention is applicable.

In this illustration, reference numerals 1-1 and 1-2 designate radio servers connected to a network 3, with the radio server 1-1 being named X while the radio server 1-2 being named Y.

Numerals 2-1 to 2-5 denote base station radio units, with the base station radio units 2-1 to 2-3 being connected to the radio server 1-1, while the base station radio units 2-4 and 2-5 being connected to the radio server 1-2. These base station radio units are named A, B, C, P and Q, respectively, and each of these base station radio units is in connection with a mobile terminal(s) existing the communicable area (an area indicated by a dotted line surrounding each of the base station radio units in Fig. 1) of its own self. In this case, the communicable area of each of the base station radio units is determined as a range having a radius corresponding to the distance within which the base station radio unit can receive a radio wave transmitted from a mobile terminal.

Furthermore, as the frequencies (which will be referred to hereinafter as channels) which can be used for the above-mentioned base station radio units 2-1 to 2-5 to make a communication with a non-shown mobile terminal, there are taken six channels CH1 to CH6. Each of the base station radio units 2-1 to 2-5 uses any one of these channels CH1 to CH6 to establish a communication with each of mobile terminals existing within its own communicable area.

In the aforesaid radio communication network system, the radio server 1-1 manages communications between each of mobile terminals lying in each of the communicable areas of the base station radio units 2-1 and 2-3 and a host server (not shown) connected to the network 3. On the other hand, the radio server 1-2 manages communications between each of mobile terminals existing in each of the communicable areas of the base station radio units 2-4 and 2-5 and the host server connected to the network 3.

That is, each of the radio servers 1-1 and 1-2, when a mobile terminal comes in the communicable area of the base station radio unit (which will be referred to hereinafter as a subordinate base station radio unit) it manages, conducts a registration certifying operation for this mobile terminal, an IP address issuing operation, or the like, and then controls data communications between a host computer connected to the network 3 and the same mobile terminal.

In addition, each of the radio servers 1-1 and 1-2 has a function to set a channel to be put to use and gives a channel switching instruction to its own subordinate base station radio units. Still additionally, each of the radio servers 1-1 and 1-2 has a section (which will be referred to hereinafter as a channel selection instructing section) for realizing this function, with its configuration including a storage means storing at least the channels being in use (each of which will be referred to hereinafter as an active channel) in all the base station radio units existing in the radio communication network system, and further including a frequency setting means for determining a channel to be used in each of the subordinate base station radio units on the basis of the contents stored in this storage means to set the determined channel in each of the subordinate base station radio units.

Thus, each of the base station radio units establishes a communication with a mobile terminal existing within its own communicable area through the use of the channel set by the frequency setting means of the radio server which manages its own self. In this case, each of the radio servers determines a channel to be given to the subordinate base station radio units with the following channel selection conditions:

1) a channel is selected which is not active in peripheral base station radio units;

2) if there are a plurality of channels falling under the 1) condition, then a channel which does not cause interference due to intermodulation is selected in consideration of the active channels in peripheral (adjacent) base station radio units and in the base station radio units (which will be referred to hereinafter as secondary peripheral base station radio units) existing on the periphery of the peripheral base station radio units; and

3) if there are a plurality of channels falling under the 2) condition, or if a plurality of channels coming under the 1) condition exist and have a possibility of causing the interference resulting from the intermodulation, of the plurality of channels, the channel having the highest frequency is selected.

Furthermore, each of the radio servers 1-1 and 1-2 comprises a reporting means for reporting channel information, including information indicative of its subordinate base station radio units and information indicative of active communication frequencies in the subordinate base station radio units, through the network 3 to the other radio servers. Additionally, each of the radio servers 1-1 and 1-2 comprises a storage editing means to update the contents stored in the storage means on the basis of the channel information given from the reporting means of the other radio servers.

Thus, the radio server 1-1 notifies the radio server 1-2 of the channel information of its subordinate base station radio units 2-1, 2-2 and 2-3, while the radio server 1-2 communicates the channel information of the its subordinate base station radio units 2-4 and 2-5 to the radio server 1-1. In addition, each of the radio servers 1-1 and 1-2 updates the channel for use in each of the base station radio units, stored in the storage means, on the basis of the channel information communicated therefrom.

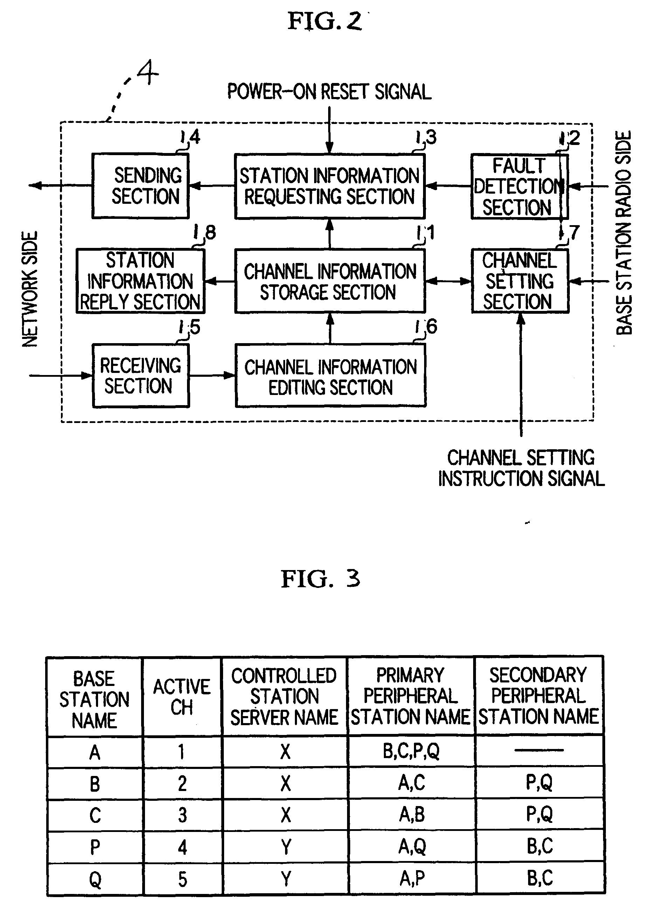

Secondly, referring to FIGs. 2 to 6, a description will be given hereinbelow of a more concrete configuration of the above-mentioned channel selection instructing section in each of the radio servers.

First Embodiment

FIG. 2 is a block diagram schematically showing a configuration of a channel selection instructing section, denoted at numeral 4, in each of the radio servers 1-1 and 1-2 according to a first embodiment of this invention. In this illustration, reference numeral 11 depicts a channel information storage section which, as shown in FIG. 3, stores, in relation to each of the base station radio units 2-1 to 2-5 (in the illustration, "A", "B", "C", "P" and "Q" in the item "BASE STATION NAME"), 1) channels being used currently (in the illustration, the item "ACTIVE CH"), 2) managing server names (in the illustration, the item "CONTROLLED STATION SERVER NAME"), 3) peripheral base station radio unit names (in the illustration, the item "PRIMARY PERIPHERAL STATION NAME"), and 4) secondary peripheral base station radio unit names (in the illustration, the item "SECONDARY PERIPHERAL STATION NAME").

In the case, for example, a non-volatile memory can be employed as the channel information storage section 11. The contents of the aforesaid 1) to 4) are predetermined but not altered.

Furthermore, numeral 12 denotes a fault detection section for detecting a fault occurring within the communicable areas of the subordinate base station radio terminals and further recognizing the name of the base station radio unit in which the fault has occurred. Numeral 13 signifies a station (base station radio unit) information requesting section which, if receiving a power-on signal for when the power supply of the radio server to which it pertains is turned on, if receiving a reset signal for when the radio server to which it pertains is reset, or if the fault detection section 12 has detected a fault, refers to the contents stored in the channel information storage section 11 for outputting a channel information requesting signal to advance a request for information (which will be referred to hereinafter as channel information) indicative of the names of the subordinate base station radio units and representative of the active channels (the channels being in use) to all the other radio servers.

Numeral 14 depicts a sending section for transmitting the channel information requesting signal outputted from the station information requesting section 13 to the network 3. Numeral 15 represents a receiving section for receiving channel information transmitted from the other radio servers through the network 3, a channel information requesting signal transmitted from the other radio servers, and other information and signals.

Numeral 16 signifies a channel information editing section for, when the receiving section 15 receives channel information sent from the other radio server in response to a channel information requesting signal outputted from the station information requesting section 13 of the radio server to which it pertains, updating (editing) the contents of the item "ACTIVE CH" in the channel information storage section 11 on the basis of that channel information. Incidentally, if the channel information has not been sent from the other radio server in response to the channel information requesting signal outputted from the station information requesting section 13, then the updating of the information about the active channel in the subordinate base station radio unit of that radio server does not take place.

Numeral 17 indicates a channel setting section for, when the channel information editing section 16 has updated the contents of the channel information storage section 11, determining a channel to be set or a channel to which switching is to be made and for giving an instruction about the determined channel to each of the subordinate base station radio units. Additionally, when the operator designates a subordinate base station radio unit and inputs a channel setting instruction signal indicative of a channel to be used in this base station radio unit, the channel setting section 17 sets the active channel of the designated base station radio unit in accordance with the contents of the channel setting instruction signal. Still additionally, upon the completion of the setting of a channel, in the channel information storage section 11, the contents of the item "ACTIVE CH" on the base station radio unit related to the instruction about the change of the channel given by the operator is updated to the set channel.

Numeral 18 depicts a station (base station radio unit) information reply section which, when the receiving section 15 has received a channel information requesting signal from the other radio server, refers to the contents stored in the channel information storage section 11 for transmitting the channel information of each of the subordinate base station radio units of the radio server, to which it pertains, through the receiving section 14 to the radio server which transmitted the aforesaid channel information requesting signal.

Furthermore, a description will be given hereinbelow of an operation of the above-described channel selection instructing section. First of all, the description will start at an operation to be conducted for when, for example, the radio server 1-2 is in operation and the power supply of the radio server 1-1 is turned on (power-on). In this case, let it be assumed that the channels the base station radio units 2-4 and 2-5 subordinate to the radio server 1-2 are using are CH4 and CH5, respectively, while the channels the base station radio units 2-1, 2-2 and 2-3 subordinate to the radio server 1-1 was using immediately before the turning-off of the power supply (power-off) of the radio server 1-1 are CH1, CH2 and CH3, respectively. Additionally, let it be assumed that the channel CH6 is not put to use for any base station radio unit.

Upon the power-on of the radio server 1-1, on the basis of the contents in the channel information storage section 11, the station information requesting section 13 transmits a channel information requesting signal related to the base station radio units 2-4 and 2-5 through the sending section 14 to the radio server 1-2. Hence, in the radio server 1-2, the station information reply section 18 refers to the channel information storage section 11 for reading out the active channels of the subordinate base station radio units 2-4 and 2-5 to send the read active channel information together with the name of each of the base station radio units as channel information through the sending section 14 to the radio server 1-1.

Subsequently, in the radio server 1-1, upon receipt of this channel information by the receiving section 15, the channel information editing section 16 updates the active channel information for the base station radio units 2-4 and 2-5 in the channel information storage section 11. On the completion of this updating, the channel setting section 17 determines channels for the base station radio units 2-1, 2-2 and 2-3 on the basis of the updated contents in the channel information storage section 11.

That is, the channel setting section 16 of the radio server 1-1 selects the channels for the base station radio units 2-1, 2-2 and 2-3, which do not interfere with the active channels in the subordinate base station radio units of the radio server 1-2, according to the above-mentioned conditions 1) to 3), and communicates the selected channels to the corresponding base station radio units 2-1, 2-2 and 2-3. A method of selecting the channels which do not interfere with the active channels of the base station radio units subordinate to the radio server 1-2 will be described herein later. The above-mentioned operation similarly applies to the case in which a reset signal is inputted to the station information requesting section 13.

Still furthermore, a description will be given hereinbelow of an operation to be conducted for when a fault occurs in the communicable area of a base station radio unit. The description will be made of the case in which, for example, the fault detection section 12 in the radio server 1-1 has detected a fault occurring in the communicable area of the base station radio unit 2-1 (whose active channel is CH1). In this case, first, on the basis of the contents of the channel information storage section 11, the station information requesting section 13 inquires at the radio server 1-2 about the channels being used currently (active channels) in the base station radio units 2-4 and 2-5.

Accordingly, in the radio server 1-2, in response to the aforesaid inquiry the receiving section 15 receives, the station information reply section 18 reads out the active channels in the base station radio units 2-4 and 2-5 stored in the channel information storage section 11 and transmits the channel information of each of the base station radio units subordinate to the radio server 1-2 through the sending section 14 to the radio server 1-1.

Following this, the receiving section 15 of the radio server 1-1 receives this channel information, and the channel information editing section 16 updates (edits) the contents of the channel information storage section 11. Thereafter, the channel setting section 17 makes a decision on (finds) a channel being not in use in the peripheral base station radio units on the basis of the updated contents of the channel information storage section 11 (the foregoing channel selection condition 1)). In this case, since the channel in which the fault occurred is CH1 and the channels being in use in the base station radio units 2-2, 2-3, 2-4 and 2-5 existing on the periphery of the base station radio unit 2-1 are CH2, CH3, CH4 and CH5, respectively, the inactive channel is CH6 only.

Thus, the channel setting section 17 gives an instruction for use of the channel CH6 to the base station radio unit 2-1. In addition, the channel setting section 17 changes the active channel of the base station radio unit 2-1 from CH1 to CH6 in the channel information storage section 11.

Secondly, a description will be given hereinbelow of the case in which, in the above-mentioned state, the fault detection section 12 in the radio server 1-2 detects a fault occurring in the communicable area of the base station radio unit 2-4 (whose active channel is CH4). In this case, first, on the basis of the contents of the channel information storage section 11, the station information requesting section 13 in the radio server 1-2 inquires at the radio server 1-1 about the channels being used currently in the base station radio units 2-1, 2-2 and 2-3.

Accordingly, in the radio server 1-1, in response to the aforesaid inquiry received through the receiving section 15, the station information reply section 18 refers to the contents of the channel information storage section 11 for transmitting the channel information on each of the base station radio units 2-1 to 2-3 through the sending section 14 to the radio server 1-2.

Furthermore, in the radio server 1-2, the receiving section receives this channel information, and the channel setting section 17 makes a decision on a channel being not in use in the peripheral base station radio units (the foregoing channel selection condition 1)). In this case, because the channel in which the fault occurred is CH4 and the active channels of the base station radio units 2-1 and 2-5 existing on the periphery of the base station radio unit 2-4 are CH6 and CH5, respectively, the available channels are CH1 to CH3.

Following this, the channel setting section 17 selects, of the available channels CH1 to CH3, a channel which does not undergo the intermodulation interference with the active channels of the other base station radio units (the foregoing channel selection condition 2)). Concretely, in the case of the above-mentioned state, the channel setting section 17 selects a channel which is not subjected to the intermodulation interference occurring with the following combinations of two channels:

a) the channel CH5 (the active channel of the base station radio unit 2-5) and the channel CH6 (the active channel of the base station radio unit 2-1);
b) the channel CH5 and the channel CH2 (the active channel of the base station radio unit 2-2);
c) the channel CH5 and the channel CH3 (the active channel of the base station radio unit 2-3);
d) the channel CH6 and the channel CH2;
e) the channel CH6 and the channel CH3; and
f) the channel CH2 and the channel CH3.

Furthermore, if, of the available channels CH1 to CH3, there is only one channel which does not undergo the intermodulation interference occurring with the aforesaid channel combinations, the channel setting section 17 of the radio server 1-2 gives instructions for the use of that channel to the base station radio unit 2-4. On the other hand, if, of the available channels CH1 to CH3, there are a plurality of channels which do not receive the influence of the intermodulation distortion arising with the aforesaid channel combinations, or if every channel is subjected to the intermodulation interference arising with the aforesaid channel combinations, the channel setting section 17 gives instructions for the use of the highest- frequency channel of these plurality of channels to the base station radio unit 2-4 (the foregoing channel selection condition 3)).

Moreover, a description will be given hereinbelow of the case in which an operator of a radio server changes the active channel of a base station radio unit manually. For the description, as an example, let it be assumed that, in the radio communication network system shown in FIG. 1, the active channel of the base station radio unit 2-1 is CH1, the active channel of the base station radio unit 2-2 is CH2, the active channel of the base station radio unit 2-3 is CH3, the active channel of the base station radio unit 2-4 is CH4 and the active channel of the base station radio unit 2-5 is CH5, and the operator changes the active channel of the base station radio unit 2-3 manually.

In this instance, there is a need for the operator to have full knowledge of the channels being used in the peripheral base station radio units and secondary peripheral base station radio units of the base station radio unit 2-3, besides there is a need for the operator to set a channel which does not interfere with the active channels of the peripheral base station radio units and the secondary peripheral base station radio units. For this reason, the operator has to set the channel CH6 as the channel to be used in the base station radio unit 2-3.

In this case, the operator inputs an instruction for the change of the channel of the base station radio unit 2-3 to the channel CH6 through the use of a keyboard or the like in the radio server 1-1 managing the base station radio unit 2-3. Hence, a channel setting instruction signal including the contents of this instruction is inputted to the channel setting section 17 in FIG. 2. In response to the input of this channel setting instruction signal, the channel setting section 17 issues instructions for the use of the channel CH6 to the base station radio unit 2-3.

In addition, the channel setting section 17 updates the contents of the item "ACTIVE CH" on the base station radio unit 2-3 in the channel intonation storage section 11 from the channel CH3 to the channel CH6. Thus, if the radio server 1-2 issues a channel information requesting signal afterwards, the radio server 1-1 will send the channel CH6 as the channel being used currently in the base station radio unit 2-3 to the radio server 1-2.

Incidentally, in the case of changing the active channel of a base station radio unit manually as stated above, it is also appropriate that the channel setting section 17 gives an instruction on the channel to be used in the base station radio unit designated by the operator to that base station radio unit to update the contents of the channel information storage section 11, before notifying the other radio servers of the information about the channel indicated.

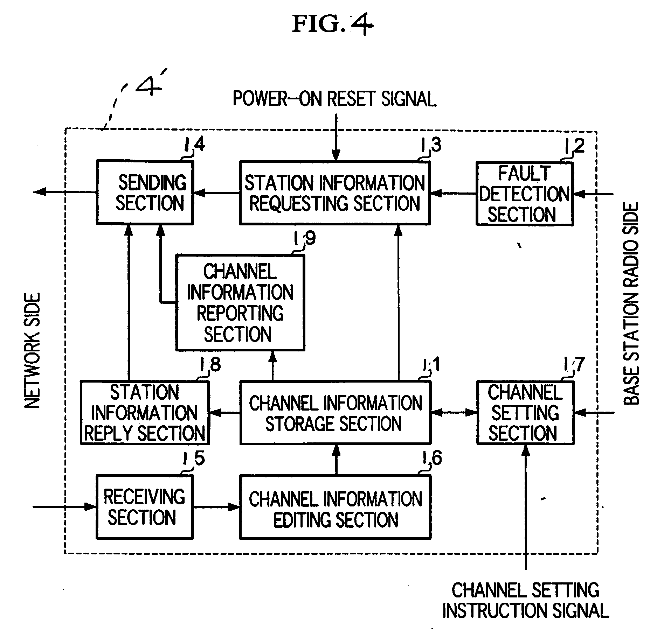

For realizing such a function, for example, as shown in FIG. 4, in a channel selection instructing section 4', a channel information reporting section 19 is provided which, when the channel setting section 17 gives instructions on a channel to be used in the base station radio unit designated by the operator to that base station radio unit to update the contents of the channel information storage section 11, reports the updated channel information on the base station radio unit through the sending section 14 to all the other radio servers.

Thus, in the other radio servers, when receiving the channel information from the channel information reporting section 19 through the receiving section 15, the channel information editing section 16 updates the contents of the item "ACTIVE CH" on the base station radio unit, designated manually by the operator for the channel change, in their own channel information storage section 11.

Second Embodiment

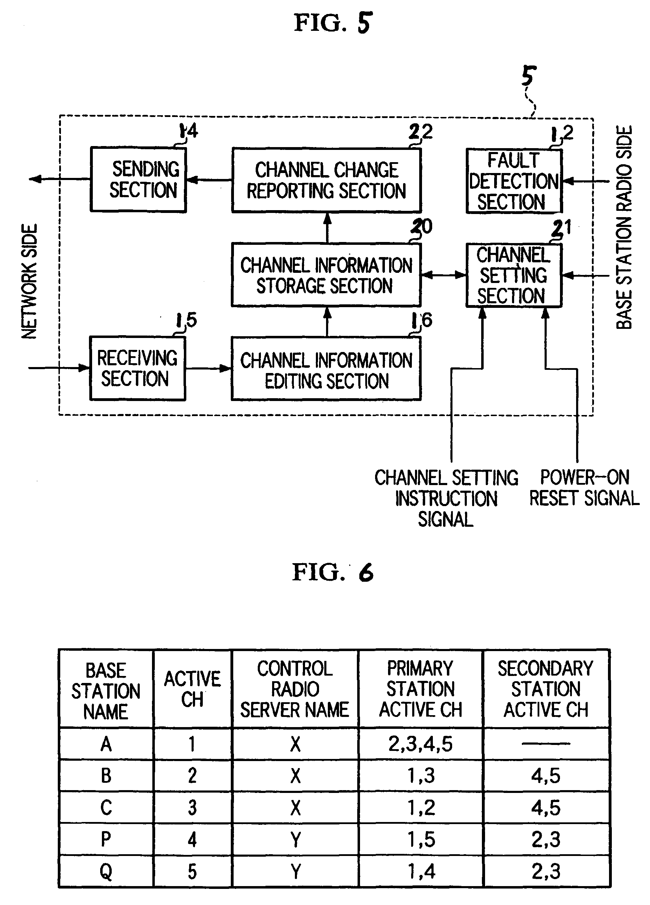

Referring to FIGs. 5 and 6, a description will be given hereinbelow of a channel selection instructing section in each of radio servers according to a second embodiment of this invention. Although in the channel selection instructing section according to the first embodiment, before an instruction for the setting or change of a channel is given to its own subordinate base station radio units, the information about the channels being used in the base station radio units subordinate to the other radio servers is collected, this embodiment differs therefrom in that, after an instruction for the setting or change of a channel is given to its own subordinate base station radio units, the information about the channel designated is reported to the other radio servers.

FIG. 5 is a block diagram schematically showing a configuration of a channel selection instructing section, denoted at numeral 5, according to the second embodiment of this invention. In this illustration, the parts corresponding those in FIG. 2 are marked with the same reference numerals, and the description thereof will be omitted for brevity. The difference of the configuration in FIG. 5 from that in FIG. 2 is as follows.

Numeral 20 represents a channel information storage section, which, as shown in FIG. 6, stores, in relation to each of the base station radio units 2-1 to 2-5 (in the illustration, "A", "B", "C", "P" and "Q" in the item "BASE STATION NAME"), 1) channels being used currently (in the illustration, the item "ACTIVE CH"), 2) managing server names (in the illustration, the item "CONTROL RADIO SERVER NAME"), 3) channels being used in peripheral base station radio units (in the illustration, the item "PRIMARY STATION ACTIVE CH"), and 4) channels being used in secondary peripheral base station radio units (in the illustration, the item "SECONDARY STATION ACTIVE CH"). As well as the channel information storage section 11 shown in FIG. 2, the channel information storage section 20 involves a non-volatile memory.

Numeral 21 depicts a channel setting section which, when a power-on signal or a reset signal is inputted or when the fault detection section 12 detects a fault such as an interfering wave in a subordinate base station radio unit, determines a channel to be set or to which switch is made and gives an instruction as to the determined channel to each of the subordinate base station radio units 20.

Numeral 22 signifies a channel change reporting section which, when the channel setting section 21 gives an instruction for the setting or switching to a channel to be used to a subordinate base station radio unit, refers to the contents of the channel information storage section 20 for reporting the channel information related to this subordinate base station radio unit through the sending section 14 to all the other radio servers connected to the network 3.

Secondly, a description will be given hereinbelow of an operation of the channel selection instructing section 5 shown in FIG. 5. This description will be made of an operation to be conducted in the case in which, for example, the radio server 1-2 is in operation and the power supply of the radio server 1-1 is turned on. In this case, let it be assumed that the active channels of the base station radio units 2-4 and 2-5 subordinate to the radio server 1-2 are CH4 and CH5, respectively, and the channels used in its own subordinate base station radio units 2-1, 2-2 and 2-3 immediately before the power supply of the radio server 1-1 is turned off are CH1, CH2 and CH3, respectively. Additionally, let it be assumed that the channel CH6 is not on the use in any base station radio unit.

First, when the power supply of the radio server 1-1 is turned on so that a power-on signal is inputted to the channel setting section 21, the channel setting section 21 gives an instruction for the use of the channel stored in the channel information storage section 20 and used immediately before the previous turning-off of the subordinate base station radio unit. In this case, since the channels used immediately before the power-off in the base station radio units 2-1, 2-2 and 2-3 are CH1, CH2 and CH3, respectively, instructions as to these channels are given to the respective subordinate base station radio units.

Furthermore, on the completion of the aforesaid instruction from the channel setting section 21, the channel change reporting section 22 refers to the contents of the channel information storage section 20 for reporting the information on the channels set in the subordinate base station radio units through the sending section 14 to the other radio servers.

On the other hand, in the radio server 1-2 which is already active, when the channel information editing section 16 receives the channel information from the radio server 1-1 through the receiving section 15, the contents about the active channels of the base station radio units 2-1, 2-2 and 2-3 are updated in the channel information storage section 20.

Incidentally, the above-mentioned operation applies similarly to the case in which a reset signal is inputted to the channel setting section 20.

Furthermore, a description will be given hereinbelow of an operation to be conducted for when a fault occurs in the communicable area of a base station radio unit its manages. For example, in a case in which the fault detection section 12 of the radio server 1-1 detects a fault occurring in the communicable area of the base station radio unit (whose active channel is CH1), on the basis of the contents of the channel information storage section 20, the channel setting section 21 instructs the base station radio unit 2-1 of the channel to which switching is to be made. In this case, because the peripheral base station radio units 2-2 to 2-5 are using CH2 to CH5, respectively, and the base station radio unit 2-1 has used the channel CH1, an instruction for the use of the spare channel CH6 is naturally given to the base station radio unit 2-1.

In addition, the channel setting section 21 changes the stored portions corresponding to the channel CH1 in each item in the channel information storage section 20. That is, in the "ACTIVE CH" to A in the "BASE STATION NAME" and in the "PRIMARY STATION ACTIVE CH" to B, C, P and Q in "BASE STATION NAME", the values on the channel CH1 are changed to the values on the channel CH6.

On the completion of this updating in the channel information storage section 20, the channel change reporting section 22 communicates the change of the active channel to the channel CH6 in the base station radio unit 2-1 through the sending section 14 to the radio server 1-2. Thus, in the radio server 1-2, the channel information editing section 16 updates the contents related to the active channel of the base station radio unit 2-1 from the channel CH1 to the channel CH6 in the channel information storage section 20.

Furthermore, a description will be given hereinbelow of a case in which, in the above-mentioned state, the fault detection section 12 in the radio server 1-2 detects a fault occurring in the communicable area of the base station radio unit 2-5 (whose active channel is CH5). In this case, first, on the basis of the contents of the channel information storage section 20, the channel setting section 21 in the radio server 1-2 makes a decision about a channel being inactive in the peripheral base station radio units (the foregoing channel selection condition 1)).

In this instance, since the channel in which the fault occurred is CH5 and the active channels of the base station radio units (base station radio units 2-1 and 2-4) existing on the periphery of the base station radio unit 2-5 are CH6 and CH4, the channels CH1 to CH3 form the available channels.

Subsequently, the channel setting section 21 selects, of the available channels CH1 to CH3, a channel which does not undergo the intermodulation interference by the active channels of the other base station radio units (the foregoing channel selection condition 2)). That is, in the above-mentioned case, a channel is selected which is not affected by the intermodulation distortion occurring with the following two-channel combinations:

a) the channel CH (the active channel of the base station radio unit 2-4) and the channel CH6 (the active channel of the base station radio unit 2-1);
b) the channel CH4 and the channel CH2 (the active channel of the base station radio unit 2-2);
c) the channel CH4 and the channel CH3 (the active channel of the base station radio unit 2-3);
d) the channel CH6 and the channel CH2;
e) the channel CH6 and the channel CH3; and
f) the channel CH2 and the channel CH3.

Furthermore, if, of the available channels CH1 to CH3, there is only one channel which does not undergo the intermodulation interference occurring with the aforesaid channel combinations, the channel setting section 21 of the radio server 1-2 gives instructions for the use of that channel to the base station radio unit 2-5. On the other hand, if, of the available channels CH1 to CH3, there are a plurality of channels which do not receive the influence of the intermodulation distortion arising with the aforesaid channel combinations, or if every channel is subjected to the intermodulation interference arising with the aforesaid channel combinations, the channel setting section 21 gives instructions for the use of the highest- frequency channel of these plurality of channels to the base station radio unit 2-5 (the foregoing channel selection condition 3)).

Still furthermore, the channel setting section 21 changes the stored portions related to the channel CH to those related to the channel, the channel setting section 21 has instructed the base station radio unit 2-4 of, in each of the items in the channel information storage section 20. That is, in the item "ACTIVE CH" to the "BASE STATION NAME" Q, In the item "PRIMARY STATION ACTIVE CH" to the "BASE STATION NAME" A and P and in the item "SECONDARY STATION ACTIVE CH" to the "BASE STATION NAME" B and C, the values of the channel CH5 are changed to the values of the channel the channel setting section 21 has instructed the base station radio unit 2-4 of.

Following this, the channel change reporting section 22 reports the channel information after the change instruction, related to the base station radio unit 2-5 through the sending section 14 to the radio server 1-1. Accordingly, in the radio server 1-1, the channel information editing section 16 changes the portions stored as the channel CH5 in each of the items in the channel information storage section 20 to the reported channel.

Moreover, a description will be given hereinbelow of a case in which, in the channel selection instructing section 5, the operator of a radio server manually changes the channel to be used in a base station radio unit. For the description only, as an example, in the radio communication network system shown in FIG. 1, let it be assumed that the active channel of the base station radio unit 2-1 is CH1, the active channel of the base station radio unit 2-2 is CH2, the active channel of the base station radio unit 2-3 is CH3, the active channel of the base station radio unit 2-4 is CH4 and the active channel of the base station radio unit 2-5 is CH5, and the operator changes the active channel of the base station radio unit 2-3 manually.

In the case of the manual change of the active channel of a base station radio unit, there is a need for the operation to fully learn the channels being in use in the peripheral base station radio units existing on the periphery of the base station radio unit 2-3 and further in the secondary peripheral base station radio units around the peripheral base station radio units, and additionally to set a channel which does not interfere with the active channels of the peripheral base station radio units and the secondary peripheral base station radio units; therefore, in the above-mentioned channel using situation, the operator must select the channel CH6 as an active channel to be set in the base station radio unit 2-3.

In this case, the operator inputs an instruction for changing the channel of the base station radio unit 2-3 to the channel 6 through the use of a keyboard or the like in the radio server 1-1 managing the base station radio unit 2-3. Thus, a channel setting instruction signal including the contents of the aforesaid instruction is inputted to the channel setting section 21 in FIG. 5. Upon receipt of this channel setting instruction signal, the channel setting section 21 issues an instruction for the use of the channel CH6 to the base station radio unit 2-3.

In addition, the channel setting section 21 updates the portions stored as the channel CH3 to the channel CH6 in each of the items in the channel information storage section 20. Still additionally, on the completion of this updating, the channel change reporting section 22 reports the channel information on the base station radio unit 2-3 through the sending section 14 to the radio server 1-2 while, in the radio server 1-2, the channel information editing section 16 updates the portions stored as the channel CH3 to the channel CH6 in each of the items in the channel information storage section 20.

As described above, in the channel selection instructing section 5 according to the second embodiment, a radio server first gives an instruction for setting or change of a channel to the base station radio units subordinate to its own self, and then the other servers update the information on the channel set or changed. Thus, for example, when the power supply of one radio server is turned off, in the other radio servers, the updating of the information on the channels being used in the base station radio units subordinate to the radio servers does not take place.

Therefore, while the power supply of the aforesaid one radio server is turned off, in the other radio servers, at the channel change for the subordinate base station radio units, a channel is selected which does not interfere with the active channels of the base station radio units subordinate to the one radio server. Hence, when the power supply of the one radio server is turned on again, even if instructions for the use of the channels which have been used immediately before the power-off are given to the subordinate base station radio units, the channels do not interfere with the active channels of the base station radio units subordinate to the other radio servers.

Thus, unlike the first embodiment, in the channel selection instructing section according to this embodiment, there is no need to make a selection decision on the channels for the subordinate base station radio units for setting instruction.

It is also appropriate that a program for realizing the processing functions shown in FIGs. 2 and 5 is recorded on a recording medium readable by a computer and the computer reads out the program recorded in this recording medium for fulfilling the functions to manage/control the frequencies to be used for communications between base station radio units and mobile terminals.

The term "computer system" is a term including hardware such as OSs and peripheral devices. Additionally, the term "computer-readable recording medium" signifies storage devices, such as floppy disks, magneto-optical disks, ROMs, CD-ROMs, and hard disks to be incorporated into computers. Still additionally, the term "computer-readable recording medium", for example, includes communication lines to be used in transmitting the program through a network such as the Internet or a communication circuit such as a telephone circuit, which dynamically retain the program for a short time, and further includes volatile memories in the interior of a computer system constituting a server or client, which retain the program for a given period of time.

Furthermore, the foregoing program can also be for realizing a portion of the aforesaid functions, or it can also be designed to realize the functions in corporation with the programs already stored in a computer system.

For example, in a case in which a need arises to set or change the communication frequency being in use in a base station radio unit connected to its own communication processing computer, it is also appropriate that, with a program for realizing the aforesaid functions, the communication processing computer is operated to realize a channel information requesting function for outputting, to other communication processing computers, a channel information requesting signal which is for making a request for the transmission of the channel information on the base station radio units connected to the other communication processing computers, or that, upon receipt of a channel information requesting signal from the other communication processing computer, the communication processing computer is driven to realize a function to send the channel information on the base station radio units connected to its own self to the channel information requesting signal sending communication processing computer for updating the information on the communication frequencies being used in all the base station radio units existing within the radio communication network system in accordance with each of the channel information sent from all the other communication processing computers in response to the request by its own channel information requesting function and further to determine communication frequencies to be used in the base station radio units connected to its own self on the basis of the updated information.

In addition, when there arises a need to set or change an active communication frequency of a base station radio unit connected to its own communication processing computer, it is also appropriate that, with the foregoing program, the aforesaid communication processing computer is operated to realize a function to determine a communication frequency to be used in the base station radio unit connected to its own communication processing computer on the basis of the information, already stored, on the communication frequencies being used in all the base station radio units existing within the radio communication network system and subsequently to report the determined channel information on the base station radio unit to all the other communication processing computers.

Still additionally, it is also appropriate that, when determining a communication frequency to be used in a base station radio unit connected to it own self, the foregoing program makes the aforesaid communication processing computer selectively determine, as the frequency to be used, a communication frequency being not in use in the base station radio units existing on the periphery of the communication frequency determination base station radio unit from a plurality of predetermined communication frequencies according to a first condition, and if there are a plurality of communication frequencies falling under the first condition, determine, as the communication frequency to be used, a communication frequency which does not cause the interference due to intermodulation in consideration of the communication frequencies being used in the peripheral base station radio units and in the base station radio units existing on the periphery of the peripheral base station radio units according to a second condition, and further, when there are a plurality of communication frequencies falling under the second condition or when every communication frequency does not fall under the second condition, determine, as the communication frequency to be used, the highest communication frequency of these plurality of channels.

As described above, according to this invention, a plurality of radio communication processing units report the communication frequencies being in use in the base station radio units connected to these units to each other; therefore, they can seize the communication frequencies being used in all the base station radio units lying within a radio communication network system, and when setting a frequency to be used in each of the base station radio units connected to their own selves, they can select a communication frequency which does not interfere with the communication frequencies being used in the base station radio units connected to the other radio communication units, thus enabling stable data communications in a radio communication network system.

It should be understood that the foregoing relates to only preferred embodiments of the present invention, and that it is intended to cover all changes and modifications of the embodiments of the invention herein used for the purpose of the disclosure, which do not constitute departures from the spirit and scope of the invention.

## Claims

1.  A radio communication processing unit which handles communication processing between each of mobile terminals and a host server connected to a network (3), with each of said plurality of mobile terminals being connected to at least one base station radio unit (2-1 to 2-5) within a communicable area of said base station radio unit connected thereto and existing within a radio communication network system in which a communication is established by radio between said mobile terminals and said host server in a state where said base station radio unit (2-1 to 2-5) intervenes therebetween, characterised by comprising:

    storage means (11, 20) for storing at least communication frequencies being used in all base station radio units (2-1 to 2-5) existing within said radio communication network system;
    frequency setting means (17, 21) for determining, on the basis of the contents stored in said storage means (11, 20), a communication frequency for use in said base station radio unit (2-1 to 2-5) connected to its own self to set the determined communication frequency in said base station radio unit (2-1 to 2-5);
    reporting means (19) for reporting channel information including information indicative of said base station radio unit (2-1 to 2-5) connected to its own self and information indicative of said communication frequency being currently in use in said base station radio unit (2-1 to 2-5) through said network system to each of different radio communication processing units; and
    storage editing means (16) for updating the contents stored in said storage means (11, 20) on the basis of said channel information given from said reporting means (19) of said different radio communication processing unit.

2.  A radio communication processing unit according to claim 1, characterised by further comprising channel information requesting means (13) for, when there arises a need to set or change a communication frequency to be used in said base station radio unit (2-1 to 2-5) connected to its own self, outputting a channel information requesting signal to make a request for transmission of channel information on said base station radio unit (2-1 to 2-5) connected to each of said different radio communication processing units, to all said different radio communication processing units,

    when receiving said channel information requesting signal from said channel information requesting means (13) of said different radio communication processing unit, said reporting means (19) referring to the contents of said storage means (11, 20) for transmitting said channel information on said base station radio unit (2-1 to 2-5) connected to its own self to said channel information requesting signal issuing radio communication processing unit, and further said frequency setting means (17, 21) determining a communication frequency to be used in said base station radio unit connected to its own self, on the basis of the contents of said storage means updated in said storage editing means (16) in accordance with each of said channel information transmitted from all said different radio communication processing units in response to a request from its own channel information request means (13).

3.  A radio communication processing unit according to claim 1, characterised in that, when there arises a need to set or change a communication frequency to be used in said base station radio unit (2-1 to 2-5) connected to its own self, said frequency setting means (17, 21) determines a communication frequency, to be used in said base station radio unit (2-1 to 2-5) connected to its own self, on the basis of the contents stored in said storage means (11, 20),

while said reporting means (19, 22) reports information on said channel information, determined by said frequency setting means (17, 21), to be used in said base station radio unit (2-1 to 2-5) connected to its own self to all said different radio communication processing units.

4. A radio communication processing unit according to any one of claims 1 to 3, characterised in that, when determining a communication frequency to be used in said base station radio unit (2-1 to 2-5) connected to its own self, said frequency setting means (17, 21) makes a frequency determination on a first condition that, of a plurality of predetermined communication frequencies, a communication frequency which is not being put to use in said base station radio unit (2-1 to 2-5) existing on the periphery of said base station radio unit (2-1 to 2-5) being a determined communication frequency using unit is determined as said communication frequency to be used therein,

if there exist a plurality of communication frequencies falling under said first condition, said frequency setting means (17, 21) makes a frequency determination on a second condition that a communication frequency which does not cause interference due to intermodulation is determined as said communication frequency to be used therein considering frequencies being used in said peripheral base station radio unit (2-1 to 2-5) and in said base station radio unit (2-1 to 2-5) existing on the periphery of said peripheral base station radio unit (2-1 to 2-5), and

if there exist a plurality of communication frequencies falling under said second condition or if there exist a plurality of frequencies falling under said first condition but not falling under said second condition, said frequency setting means (17, 21) determines the highest communication frequency of said plurality of channels as said communication frequency to be used therein.

5. A computer-readable recording medium recording a radio communication processing program for handling communication processing between each of a plurality of mobile terminals and a host server connected to a network (3), with each of said plurality of mobile terminals being present within a radio communication network system in which a communication is made by radio between each of said mobile terminals and said host server in a state where base station radio units (2-1 to 2-5) intervenes therebetween, and with said radio communication processing program being run by a communication processing computer connected to at least one base station radio unit (2-1 to 2-5), and even with each of said mobile terminals existing in a communicable area of said base station radio unit (2-1 to 2-5) connected to said communication processing computer, characterised in that said radio communication program making said communication processing computer fulfill functions of:

storing, in storage means (11, 20), at least communication frequencies being used in all said base station radio units (2-1 to 2-5) existing within said radio communication network system;

determining, on the basis of the contents stored in said storage means (11, 20), a communication frequency for use in said base station radio unit (2-1 to 2-5) connected to its own unit to set the determined communication frequency in said base station radio unit (2-1 to 2-5);

reporting channel information including information indicative of said base station radio unit connected to its own unit and information indicative of a communication frequency being currently in use in said base station radio unit (2-1 to 2-5) connected thereto through said network to a different radio communication processing unit; and

updating the contents stored in said storage means (11, 20) on the basis of the channel information given from reporting means (19, 22) of said different radio communication processing unit.

**FIG.1**

EP 1 018 848 A2

## FIG. 2

POWER-ON RESET SIGNAL

NETWORK SIDE

BASE STATION RADIO SIDE

SENDING SECTION (14)

STATION INFORMATION REQUESTING SECTION (13)

FAULT DETECTION SECTION (12)

STATION INFORMATION REPLY SECTION (18)

CHANNEL INFORMATION STORAGE SECTION (11)

CHANNEL SETTING SECTION (17)

RECEIVING SECTION (15)

CHANNEL INFORMATION EDITING SECTION (16)

CHANNEL SETTING INSTRUCTION SIGNAL

## FIG. 3

| BASE STATION NAME | ACTIVE CH | CONTROLLED STATION SERVER NAME | PRIMARY PERIPHERAL STATION NAME | SECONDARY PERIPHERAL STATION NAME |
|---|---|---|---|---|
| A | 1 | X | B,C,P,Q | ——— |
| B | 2 | X | A,C | P,Q |
| C | 3 | X | A,B | P,Q |
| P | 4 | Y | A,Q | B,C |
| Q | 5 | Y | A,P | B,C |

EP 1 018 848 A2

# FIG. 4

POWER-ON RESET SIGNAL

NETWORK SIDE

BASE STATION RADIO SIDE

14 SENDING SECTION

13 STATION INFORMATION REQUESTING SECTION

12 FAULT DETECTION SECTION

19 CHANNEL INFORMATION REPORTING SECTION

18 STATION INFORMATION REPLY SECTION

11 CHANNEL INFORMATION STORAGE SECTION

17 CHANNEL SETTING SECTION

15 RECEIVING SECTION

16 CHANNEL INFORMATION EDITING SECTION

CHANNEL SETTING INSTRUCTION SIGNAL

16

## FIG. 5

## FIG. 6

| BASE STATION NAME | ACTIVE CH | CONTROL RADIO SERVER NAME | PRIMARY STATION ACTIVE CH | SECONDARY STATION ACTIVE CH |
|---|---|---|---|---|
| A | 1 | X | 2,3,4,5 | —— |
| B | 2 | X | 1,3 | 4,5 |
| C | 3 | X | 1,2 | 4,5 |
| P | 4 | Y | 1,5 | 2,3 |
| Q | 5 | Y | 1,4 | 2,3 |

# FIG. 7

(a)

(b)